# EUROPÄISCHE PATENTSCHRIFT

(11) **EP 2 608 944 B1**
(45) Veröffentlichungstag und Bekanntmachung des Hinweises auf die Patenterteilung: **29.11.2017**
(21) Anmeldenummer: 11785295.4
(22) Anmeldetag: 23.08.2011
(51) Int. Cl.: B29C 47/56, B29C 47/58, B29C 47/06, B29C 47/08, B29D 30/62

(54) **ERWEITERBARE VORRICHTUNG ZUM CO-EXTRUDIEREN**
EXTENSIBLE CO-EXTRUSION DEVICE
DISPOSITIF EXTENSIBLE POUR LA CO-EXTRUSION

(30) Priorität: 23.08.2010 DE 102010036075
(43) Veröffentlichungstag der Anmeldung: 03.07.2013
(73) Patentinhaber: Harburg-Freudenberger Maschinenbau GmbH, 21079 Hamburg (DE)
(72) Erfinder: SCHNABEL, Astrid, 21218 Seevetal (DE)
(74) Vertreter: Patentanwälte Klickow & Partner Partnerschaftsgesellschaft mbB
(86) Internationale Anmeldenummer: PCT/DE2011/001646
(87) Internationale Veröffentlichungsnummer: WO 2012/025101

(56) Entgegenhaltungen:
- EP-A1- 0 270 816
- DE-A1- 3 430 062
- DE-A1- 19 517 247
- DE-A1- 19 803 269
- JP-A- 2001 047 494
- KR-B1- 101 042 925
- US-A- 4 619 599
- US-A1- 2006 018 987

## Beschreibung

Die Erfindung betrifft eine Vorrichtung zum Extrudieren, die einen Extrusionskopf zur Verbindung mit mindestens zwei Extrudern sowie mindestens ein Werkzeug zur Formung eines Produktes aus mindestens zwei extrudierten Werkstoffen aufweist, und bei der in einem dem Extrusionskopf zugewandten Bereich des Werkzeuges mindestens ein Erweiterungselement angeordnet ist und bei der das Erweiterungselement im Bereich einer ersten Oberfläche im Wesentlichen eben ausgebildet ist und im Bereich seiner der ersten Oberfläche abgewandten zweiten Oberfläche mindestens einen Fließweg für den extrudierten Werkstoff aufweist.

Derartige Vorrichtungen werden insbesondere verwendet, um streifenförmige Elemente aus elastomeren Materialien zur Herstellung von Reifen zu erzeugen. Derartige

Streifen bestehen häufig aus zwei oder mehr Schichten aus unterschiedlichen elastomeren Materialien. Häufig weisen diese Schichten eine schlechte elektrische Leitfähigkeit auf. Die Verwendung von Fahrzeugreifen, die aus derartigen durchgehend schlecht leitenden Schichten aufgebaut sind, führt zu einem Risiko einer elektrostatischen Aufladung des Fahrzeugs.

Zur Vermeidung dieses Effektes der elektrostatischen Aufladung ist es bereits bekannt, in die streifenförmigen Materialien zusätzliche elektrisch leitfähige Bereiche einzubetten. Beispielsweise wird in der EP 1 103 391 eine Vorrichtung zum Koextrudieren von Kautschukmischungen beschrieben, bei der im Bereich des Extrusionskopfes nahe zur Ausströmöffnung eine rohrartige Düse angeordnet ist, die das anströmende Material in zwei Teilströme aufteilt. Auf einer der Fließrichtung abgewandten Seite der Düse befindet sich ein Ausströmspalt, aus dem das zusätzliche Material austritt, das dann die beiden voneinander getrennten Bereiche wieder miteinander verbindet. Das zusätzliche Material bildet die Schicht aus, die die beiden elektrisch nicht leitenden Schichten durchdringt.

Durch die Einbringung einer derartigen Zusatzdüse in den Hauptströmungsweg werden die Strömungsverhältnisse, insbesondere die auftretenden Strömungswiderstände, verändert. Eine exakte reproduzierbare Materialverteilung ist deshalb unter Verwendung einer derartigen Vorrichtung nur schwer zu erreichen.

Aus der US 4 619 599 ist bereits eine Vorrichtung zum Extrudieren bekannt, die einen Extrusionskopf zur Verbindung mit Extrudern aufweist und die mit einem Werkzeug zur Formung eines Produktes versehen ist. Eine derartige Vorrichtung wird ebenfalls in der JP 2001047494 A beschrieben.

Weitere Vorrichtungen zum Extrudieren mit Extrusionsköpfen sowie Werkzeugen zur Formung eines Produktes werden in der EP 0 270 816 A1 sowie der DE 195 17 247 A1 beschrieben.

Die KR 101 042 925 B1 beschreibt ebenfalls eine Vorrichtung zum Extrudieren, die einen Extrusionskopf sowie Werkzeuge zur Formung eines Produktes aufweist.

In der US 2006/018987 A1 wird gleichfalls eine Vorrichtung zum Extrudieren beschrieben, die einen Extrusionskopf sowie Werkzeuge besitzt.

Aufgabe der vorliegenden Erfindung ist es, eine Vorrichtung der einleitend genannten Art derart zu konstruieren, dass bei einem einfachen konstruktiven Aufbau eine Herstellung von qualitativ hochwertigen Materialstreifen mit gleich-bleibenden Materialeigenschaften unterstützt wird.

Diese Aufgabe wird erfindungsgemäß durch die Merkmale des Anspruchs 1 gelöst. Erfindungsgemäß wird ein Co-Extrusionskopf mit einem oder mehreren Kopfteilen bereitgestellt, bei dem mindestens eines der Kopfelemente einen zusätzlichen Fließkanal enthält, der über einen separaten zusätzlichen Extruder mit Material versorgt wird. Insbesondere ist daran gedacht, in ein standardmäßiges vorhandenes Kopfteil ein separates zusätzliches Spritzwerkzeug zu integrieren. In das Spritzwerkzeug sind ein oder mehrere Fließkanäle eingearbeitet, durch die hindurch das Material zum Spritzwerkzeug geführt wird. Hierdurch wird ein zusätzlicher Profilstreifen in das Co-ExtrusionsProfil eingebracht. Die Co-Extrusionsköpfe können klappbare Kopfteile besitzen.

Die erfindungsgemäße Verwendung des Erweiterungselementes ermöglicht es insbesondere, von ihrer Grundkonstruktion langjährig bewährte Co-Extrusionsspritzköpfe zu verwenden und lediglich durch die Erweiterungselemente zu modifizieren.

Erfindungsgemäß ist es insbesondere möglich, das Einbringen einer zusätzlichen Mischung in das extrudierte Gummiprofil durchzuführen. Dies kann insbesondere eine leitfähige Mischung sein. Eine Anwendung kann beispielsweise erfolgen bei Profilen für Reifenlaufflächen mit einem hohen Anteil von Silica. Dieser erhöhte Anteil von Silica führt typischerweise zu einer Reduzierung des Rollwiderstandes. Die leitfähige Mischung, ein sogenanntes Chimney-Profil, leitet elektrostatische Aufladungen des Fahrzeuges in die Fahrbahn ab.

Insbesondere ist daran gedacht, dass sich die zusätzliche und vorzugsweise elektrisch leitende Mischung im Endprofil durch mehrere übereinanderliegende Mischungsbereiche hindurch erstreckt. Diese übereinanderliegenden Mischungsbereiche sind typischerweise elektrisch schlecht leitend.

Aufgrund der vergleichsweise geringen räumlichen Ausdehnung des vom Erweiterungselement zugeführten Materialanteiles ist es in der Regel ausreichend, einen zusätzlichen Extruder mit einem geringen Schneckenquerschnitt zu verwenden. Die Ausbildung und Führung des Extrusionskanals für das Erweitungeselement erfolgt analog zu den weiteren Extrusionskanälen im Co-Extrusionskopf.

Die erfindungsgemäße Integration des Erweiterungselementes als zusätzliches Spritzwerkzeug in ein vorhandenes Kopfteil vermeidet die Verwendung eines separaten vollständigen Kopfteils. Das Erweiterungselement als zusätzliches Spritzwerkzeug kann einteilig mit eingearbeiteten Fließkanälen oder als Werkzeugträger mit modularen werkzeugeinsätzen ausgebildet sein. Unabhängig von der konkreten Art und Weise der Ausführung kann eine Verschraubung oder Verklemmung des Erweiterungselementes im Bereich des vorhandenen Kopfteils erfolgen.

Die Bedienungsfreundlichkeit kann dadurch erhöht werden, dass das Erweiterungselement verschwenkbar im Bereich des Extrusionskopfes angeordnet ist.

Gemäß einer typischen Ausführungsform ist vorgesehen, dass der Extrusionskopf eine Mehrzahl von Flusskanälen aufweist.

Zur Bereitstellung des Materials für den zusätzlichen Streifen ist vorgesehen, dass das Erweiterungselement über einen Flusskanal mit einem Zusatzextruder verbindbar ist.

Ein modularer Vorrichtungsaufbau wird dadurch unterstützt, dass alle Anschlüsse zur Verbindung mit Extrudern außenseitig am Extrusionskopf angeordnet sind.

Eine besonders gleichmäßige Produktion wird dadurch erreicht, dass eine Zusammenführung von Flusskanälen im Bereich des Werkzeuges erfolgt.

Eine Anpassung nach unterschiedlichen Anforderungen wird dadurch unterstützt, dass das Erweiterungselement mindestens zwei Fließwege aufweist.

Insbesondere ist daran gedacht, dass mindestens einer der Fließwege von einem Fließwegblocker verschließbar ist.

In den Zeichnungen sind Ausführungsbeispiele der Erfindung schematisch dargestellt. Es zeigen:
- Fig. 1: Einen schematischen Querschnitt durch einen extrudierten Streifen, der aus unterschiedlichen gegeneinander abgegrenzten Materialbereichen besteht,
- Fig. 2: eine schematische Darstellung eines Duplex-Extrusionskopfes vor einer Integration des Zusatzelementes,
- Fig. 3: den Extrusionskopf gemäß Fig. 2 nach einer Integration des Erweiterungselementes,
- Fig. 4: der Extrusionskopf gemäß Fig. 3 nach einem Öffnen eines klappenartigen Erweiterungselementes,
- Fig. 5: eine perspektivische Darstellung einer Kassette mit Fließkanälen bei einer rückwärtigen Ansicht,
- Fig. 6: eine Ausführungsform eines klappenartigen Erweiterungselementes für einen Zusatzstreifen,
- Fig. 7: eine gegenüber Fig. 6 abgewandelte Ausführungsform zur Zuführung von einem oder zwei Streifen bei Verwendung von Blockern im Bereich der nicht benötigten Fließwege und
- Fig. 8: die Anordnung gemäß Fig. 7 bei einer geänderten Anordnung der Blockern in den Fließwegen.

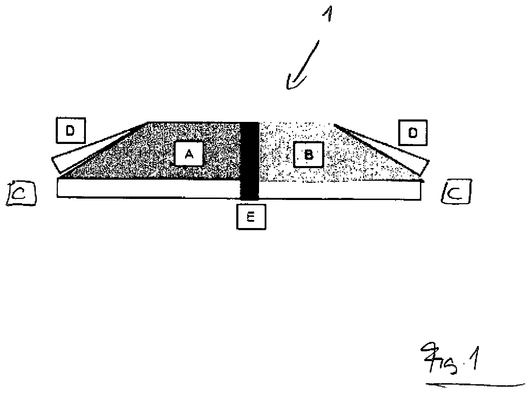

Fig. 1 zeigt einen schematischen Querschnitt durch einen extrudierten Streifen (1). Der Streifen (1) besteht aus mehreren und gegeneinander abgegrenzten Materialbereichen (A, B, C, D, E). Jeweils gleiche Buchstaben bezeichnen die Verwendung jeweils gleicher Materialien. Gemäß einem typischen Anwendungsbeispiel bei der Herstellung von Streifen (1) aus einem elastomeren Material für die Herstellung von Fahrzeugreifen sind die Materialien (A, B, C) elektrisch nicht beziehungsweise schlecht leitend. Für den Bereich E wird ein Material mit guter elektrischer Leitfähigkeit verwendet. Der Materialbereich E geht durch die Materiallagen aus den Materialien (A, B, C) hindurch.

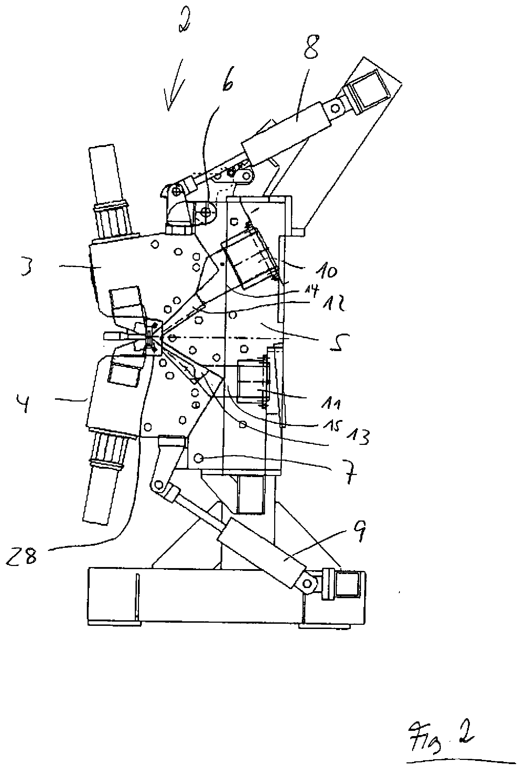

Fig. 2 zeigt beispielhaft einen Extrusionskopf (2), der zur Verbindung mit zwei nicht dargestellten Extrudern vorgesehen ist. Gemäß dem dargestellten Ausführungsbeispiel weist der Extrusionskopf (2) zwei verschwenkbare Kopfteile (3, 4) auf, wobei die Verschwenkung relativ zu einer Kopfbasis (5) erfolgen kann. Die Kopfteile (3, 4) sind sowohl über Schwenkgelenke (6, 7) als auch über Zylinder (8, 9) mit der Kopfbasis (5) verbunden. Die Zylinder (8, 9) sind typischerweise als Hydraulikzylinder ausgebildet.

Bei einer Positionierung von Kolben der Zylinder (8, 9) erfolgt eine Verschwenkung der Kopfteile (3, 4) um die Schwenkgelenke (6, 7) herum.

Die Kopfbasis (5) weist im Bereich ihrer den Kopfteilen (3, 4) abgewandten Rückseite Anschlüsse (10, 11) zur Verbindung mit nicht dargestellten Extrudern auf. Zwischen den Kopfteilen (3, 4) und der Kopfbasis (5) sind Einsatzelemente (12, 13) zur mindestens bereichsweisen Begrenzung von Flusskanälen (14, 15) angeordnet.

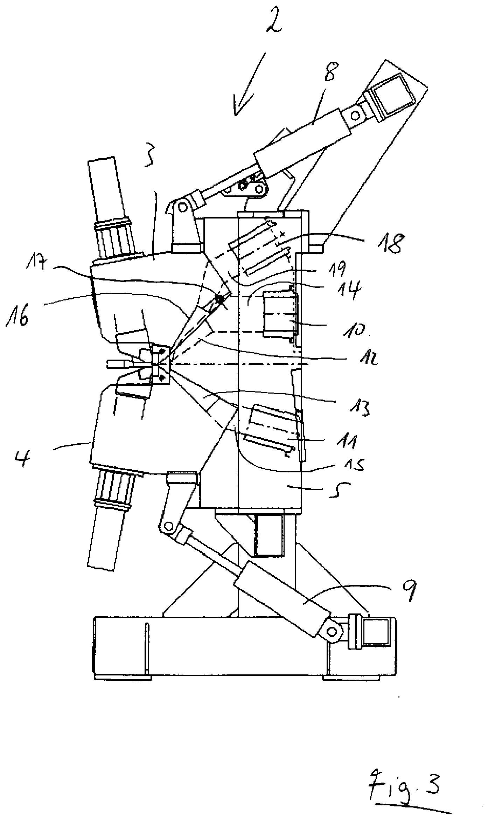

Fig. 3 zeigt eine gegenüber Fig. 2 modifizierte Anordnung mit einem erfindungsgemäßen Erweiterungselement (16). Beim dargestellten Ausführungsbeispiel ist das Erweiterungselement (16) über ein Schwenkgelenk (17) verschwenkbar angeordnet. Die Anschlüsse (10, 11) wurden hinsichtlich ihrer Anordnung gegenüber Fig. 2 leicht modifiziert, um ausreichend Platz für einen Anschluss (18) zu schaffen, der über einen Flusskanal (19) mit einem Erweiterungselement (16) verbunden ist und zum Anschluss eines zusätzlichen Extruders dient.

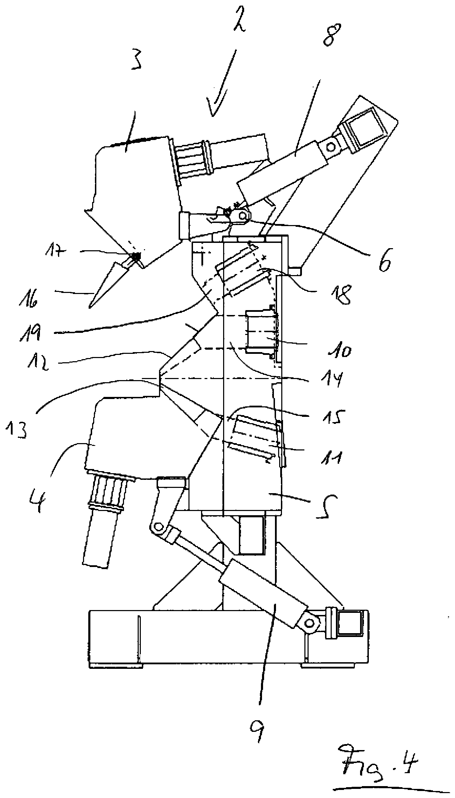

Fig. 4 zeigt die Anordnung gemäß Fig. 3 nach einem Aufschwenken des Kopfteiles (3) um das Schwenkgelenk (6) herum. Hierzu wurde der Kolben des Zylinders (8) eingezogen. Es ist zu erkennen, dass gemäß der vorliegenden Erfindung das Erweiterungselement (16) über das Schwenkgelenk (17) klappenartig verschwenkbar mit dem Kopfteil (3) verbunden ist.

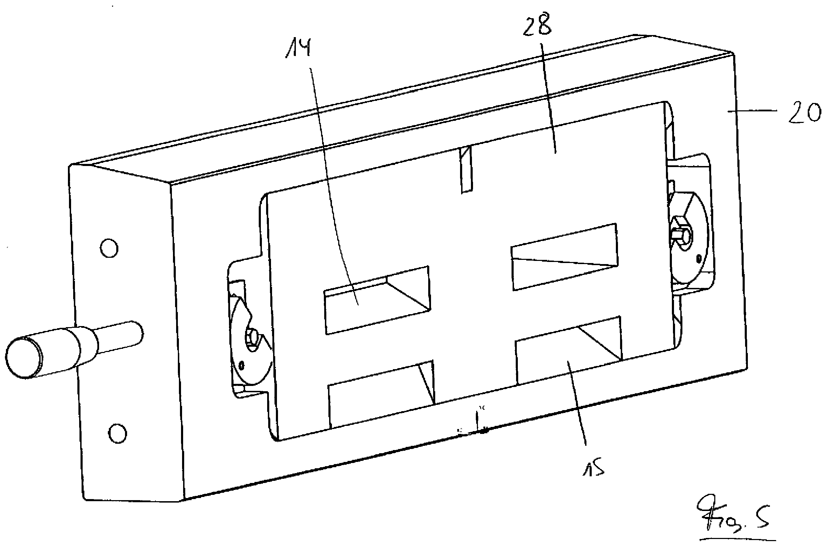

Fig. 5 zeigt in einer perspektivischen Darstellung eine Kassette (20) bei einer Blickrichtung von hinten. Zu erkennen sind Eintritte der Fließkanäle (14, 15, 19) in das Werkzeug (28), Zunge oder Vorschablone genannt. Im Werkzeug erfolgt die Zusammenführung der Flusskanäle.

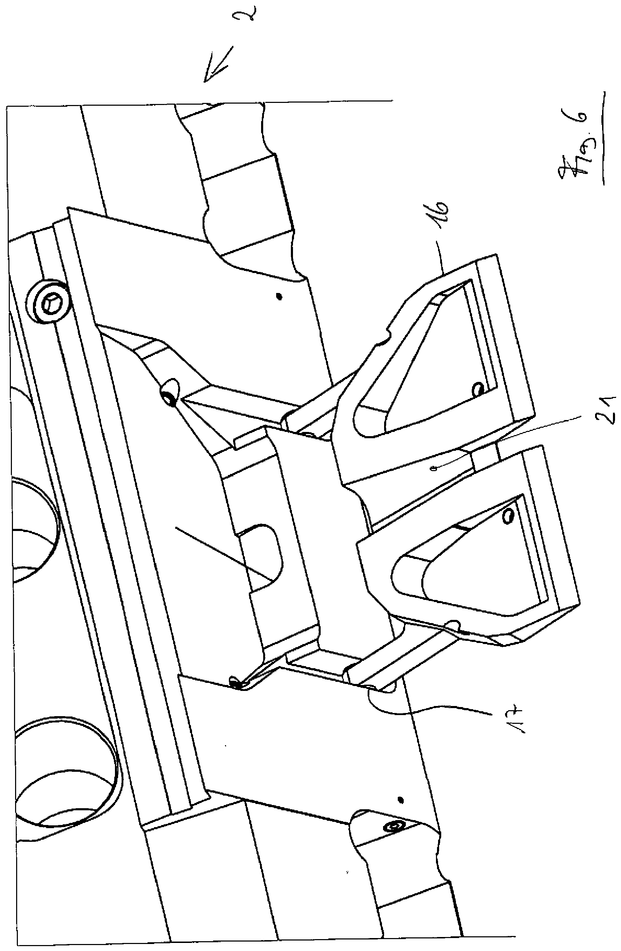

Fig. 6 zeigt die erfindungsgemäße Ausführung für das Erweiterungselement (16). Das Erweiterungselement (16) weist im Bereich einer ersten Oberfläche einen Fließweg (21) auf. Diese Ausführungsform dient zur Herstellung eines einzelnen Streifens.

Im Bereich einer der ersten Oberfläche gegenüberliegenden zweiten Oberfläche ist das Erweiterungselement (16) glatt ausgebildet. In einem geschlossenen Zustand ist die erste Oberfläche mit dem Fließweg (21) dem Kopfteil (3) zugewandt angeordnet.

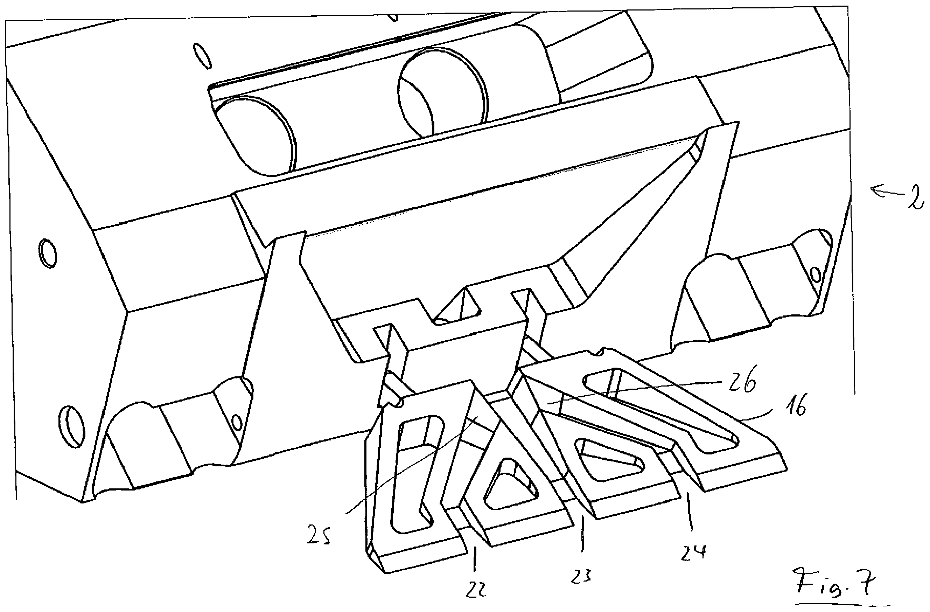

Fig. 7 zeigt eine Ausführungsform des Erweiterungselementes (16) mit drei Fließwegen (22, 23, 24). In den Fließwegen (22, 24) sind Fließwegblocker (25, 26) angeordnet, sodass bei der dargestellten Ausstattungsvariante lediglich der Fließweg (23) offen ist. Diese Variante würde zur Herstellung von einem Streifen verwendet werden.

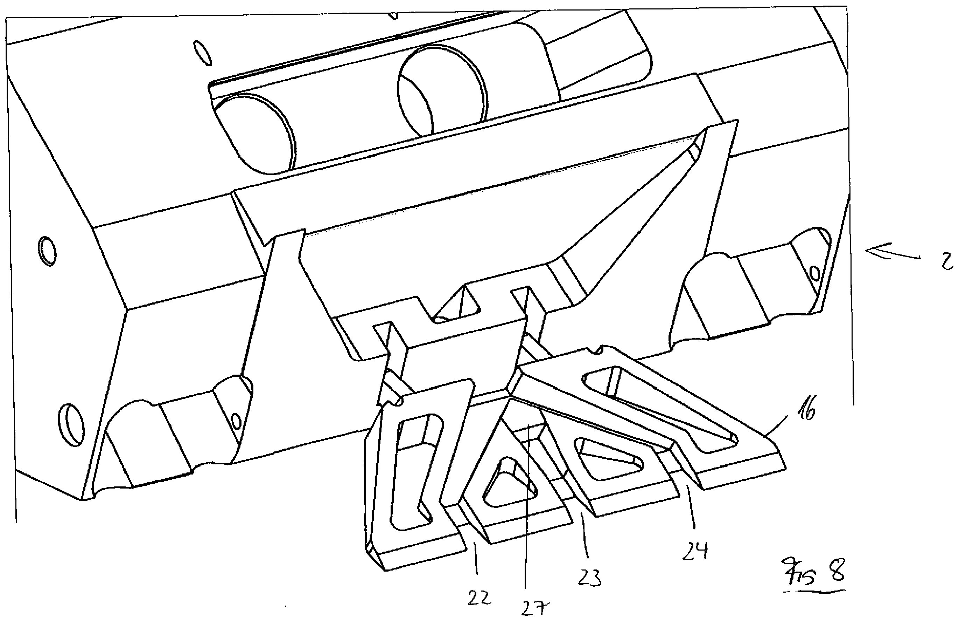

Fig. 8 zeigt eine gegenüber der Ausführungsvariante in Fig. 7 umgerüstete Anordnung, bei der die Fließwege (22, 24) frei sind und ein Fließwegblocker (27) im Bereich des Fließweges (23) angeordnet ist. Diese Ausführungsform dient zur Herstellung von zwei Streifen.

Zu einer Durchführung der Schwenkbewegung des Erweiterungselementes (16) können pneumatische, elektrische oder hydraulische Stellelemente verwendet werden. Ebenfalls ist an eine manuelle Verschwenkbarkeit gedacht.

Entsprechend den jeweiligen Anwendungsanforderungen können die Fließwege (21, 22, 23, 24) einzeln oder sich verzweigend ausgebildet werden.

Ein besonderer Aspekt der vorliegenden Erfindung ist darin zu sehen, dass alle verwendeten Fließwege nicht bereits im Bereich der Kopfbasis (5) oder der Kopfteile (3, 4) zusammengeführt werden, sondern sich bis zum Werkzeug (28) erstrecken und erst dort zusammengeführt werden. Dies unterstützt die Erreichung eines guten Strämungsverhaltens der elastomeren Materialien durch eine optimale Gestaltung aller Fließweg. Es liegt eine im Wesentlichen gleichmäßige Kompression entlang der Fließwege vor, es können gleiche Strömungsrichtungen eingehalten und scharfe Umlenkungen vermieden werden. Es erfolgt dann erst ein kontinuierliches Zusammenführen aller Komponenten im Bereich des Werkzeuges (28) was eine gute Haftung der einzelnen Materialbereiche an den Trennfugen unterstützt.

Durch einen separaten Eintritt der getrennten Fließkanäle in das Werkzeug (28) wird eine optimale Massenverteilung erreicht und es wird eine gute und reproduzierbare Symmetrie des hergestellten Profils bereitgestellt. Darüber hinaus kann die Zuführung der einzelnen Materialien gut ausbalanciert werden, was zu kurzen Einfahrzeiten der Werkzeuge (28) und einer erhöhten Qualität des hergestellten Profils führt.

Der erfindungsgemäß verwendete Zusatzextruder kann mit zwei, drei oder vier üblichen Standardextrudern in Kombination eingesetzt werden. Die konkrete Anzahl der erforderlichen Extruder hängt von der Anzahl der unterschiedlichen zu verwendenden Materialien ab. Grundsätzlich kann auch mehr als ein Erweiterungselement (16) im Bereich des Extrusionskopfes (2) angeordnet werden. Entsprechend ergibt sich dann auch die Anzahl der erforderlichen zusätzlichen Extruder.

Die Anordnung der zusätzlichen Extruder zur Verbindung mit dem oder den Erweiterungselementen (16) erfolgt in Abhängigkeit von den vorliegenden konstruktiven Gegebenheiten. Beispielsweise können die zusätzlichen Extruder axial über oder unter den vorhandenen Extrudern des Extrusionskopfes (2) angeordnet werden. Grundsätzlich ist das Hineinextrudieren eines oder mehrerer Gummistreifen aber auch aus beliebigen anderen Richtungen in den Spritzkopf (2) hinein möglich.

## Patentansprüche

1. Vorrichtung zum Extrudieren, die einen Extrusionskopf (2) zur Verbindung mit mindestens zwei Extrudern sowie mindestens ein Werkzeug (28) zur Formung eines Produktes aus mindestens zwei extrudierten Werkstoffen aufweist, wobei der Extrusionskopf (2) ein erstes verschwenkbares Kopfteil (3) und ein zweites verschwenkbares Kopfteil (4) aufweist und bei der in einem dem Extrusionskopf (2) zugewandten Bereich des Werkzeuges (28) mindestens ein Erweiterungselement (16) angeordnet ist und bei der das Erweiterungselement (16) im Bereich einer ersten Oberfläche mindestens einen Fließweg (21, 22, 23, 24) für den extrudierten Werkstoff aufweist und im Bereich seiner der ersten Oberfläche abgewandten zweiten Oberfläche im Wesentlichen glatt ausgebildet ist, **dadurch gekennzeichnet, dass** das Erweiterungselement (16) über ein Schwenkgelenk (17) klappenartig verschwenkbar mit dem ersten Kopfteil (3) verbunden ist, wobei in einer offenen Position des Extrusionskopfes (2) das Erweiterungselement (16) in einer Richtung zum zweiten Kopfteil (4) des Extrusionskopfes (2) gerichtet ist und wobei in einer geschlossenen Position des Extrusionskopfes (2) das Erweiterungselement (16) zwischen dem ersten Kopfteil (3) und dem zweiten Kopfteilteil (4) des Extrusionskopfes (2) angeordnet ist.

2. Vorrichtung nach Anspruch 1, **dadurch gekennzeichnet, dass** der Extrusionskopf (2) eine Mehrzahl von Flusskanälen (14, 15) aufweist.

3. Vorrichtung nach einem der Ansprüche 1 bis 2, **dadurch gekennzeichnet, dass** das Erweiterungselement (16) über einen Flusskanal (19) mit einem Zusatzextruder verbindbar ist.

4. Vorrichtung nach einem der Ansprüche 1 bis 3, **dadurch gekennzeichnet, dass** alle Anschlüsse (10, 11, 18) zur Verbindung mit Extrudern außenseitig am Extrusionskopf (2) angeordnet sind.

5. Vorrichtung nach einem der Ansprüche 1 bis 4, **dadurch gekennzeichnet, dass** eine Zusammenführung von Flusskanälen (14, 15) im Bereich des Werkzeuges (28) erfolgt.

6. Vorrichtung nach einem der Ansprüche 1 bis 5, **dadurch gekennzeichnet, dass** das Erweiterungselement (16) mindestens zwei Fließwege (21, 22, 23, 24) aufweist.

7. Vorrichtung nach Anspruch 6, **dadurch gekennzeichnet, dass** mindestens einer der Fließwege (21, 22, 23, 24) von einem Fließwegblocker (25, 26, 27) verschließbar ist.

## Claims

1. Extrusion device comprising an extrusion head (2) for establishing a connection to at least two extruders and at least one tool (28) for shaping a product from at least two extruded materials, the extrusion head (2) having a first pivotable head part (3) and a second pivotable head part (4), and at least one extension element (16) is disposed in a region of the tool (28) facing the extrusion head (2), and the extension element (16) has at least one flow path (21, 22, 23, 24) for the extruded material in the region of a first surface and is of a substantially smooth design in the region of its second surface facing away from the first surface, **characterised in that** the extension element (16) is pivotably connected in a flap-like manner to the first head part (3) via a pivot joint (17) and when the extrusion head (2) is in an open position, the extension element (16) is oriented in a direction towards the second head part (4) of the extrusion head (2) and when the extrusion head (2) is in a closed position, the extension element (16) is disposed between the first head part (3) and the second head part (4) of the extrusion head (2).

2. Device as claimed in claim 1, **characterised in that** the extrusion head (2) has a plurality of flow passages (14, 15).

3. Device as claimed in one of claims 1 to 2, **characterised in that** the extension element (16) can be connected to an additional extruder via a flow passage (19).

4. Device as claimed in one of claims 1 to 3, **characterised in that** all connectors (10, 11, 18) for establishing a connection to extruders are disposed on the external face of the extrusion head (2).

5. Device as claimed in one of claims 1 to 4, **characterised in that** flow passages (14, 15) converge in the region of the tool (28).

6. Device as claimed in one of claims 1 to 5, **characterised in that** the extension element (16) has at least two flow paths (21, 22, 23, 24).

7. Device as claimed in claim 6, **characterised in that** at least one of the flow paths (21, 22, 23, 24) can be closed off by a flow path blocker (25, 26, 27).

## Revendications

1. Dispositif d'extrusion, qui présente une tête d'extrusion (2) à relier à au moins deux extrudeuses ainsi qu'un outil (28) pour le moulage d'un produit constitué d'au moins deux matériaux extrudés, où la tête d'extrusion (2) présente une première partie pivotante (3) et une deuxième partie pivotante (4), où dans la partie de l'outil (28) orientée vers la tête d'extrusion (2) est agencé un élément d'élargissement (16) et où l'élément d'élargissement (16) présente au niveau d'une première surface, au moins un trajet d'écoulement (21, 22, 23, 24) pour le matériau extrudé et est essentiellement lisse au niveau de la deuxième surface opposée à la première surface, **caractérisé en ce que** l'élément d'élargissement (16) est relié à la première partie de tête (3) par une articulation (17) pivotante de type valve, où en position ouverte de la tête d'extrusion (2), l'élément d'élargissement (16) est dirigé en direction de la deuxième partie de tête (4) de la tête d'extrusion (2) et où en position fermée de la tête d'extrusion (2), l'élément d'élargissement (16) est agencé entre la première partie (3) et la deuxième partie de tête (4) de la tête d'extrusion (2).

2. Dispositif selon la revendication 1, **caractérisé en ce que** la tête d'extrusion (2) présente une pluralité de canaux d'écoulement (14, 15).

3. Dispositif selon l'une des revendications 1 et 2, **caractérisé en ce que** l'élément d'élargissement (16) est relié par un canal d'écoulement (19) à une extrudeuse supplémentaire.

4. Dispositif selon l'une des revendications 1 à 3, **caractérisé en ce que** tous les raccords (10, 11, 18) pour la liaison aux extrudeuses sont agencés à l'extérieur de la tête d'extrusion (2).

5. Dispositif selon l'une des revendications 1 à 4, **caractérisé en ce que** les canaux d'écoulement (14, 15) sont reliés au niveau de l'outil (28).

6. Dispositif selon l'une des revendications 1 à 5, **caractérisé en ce que** l'élément d'élargissement (16) présente au moins deux trajets d'écoulement (21, 22, 23, 24).

7. Dispositif selon la revendication 6, **caractérisé en ce qu'**au moins un des trajets d'écoulement (21, 22, 23, 24) peut être fermé par un bloqueur de trajet d'écoulement (25, 26, 27).
